# EUROPÄISCHE PATENTSCHRIFT

(11) **EP 2 496 450 B1**
(45) Veröffentlichungstag und Bekanntmachung des Hinweises auf die Patenterteilung: **04.12.2013**
(21) Anmeldenummer: 10778550.3
(22) Anmeldetag: 28.10.2010
(51) Int. Cl.: B60R 25/02, B62D 5/04

(54) **STEER-BY-WIRE-LENKUNG MIT ELEKTROMECHANISCHER LENKUNGSVERRIEGELUNG**
STEER-BY-WIRE SYSTEM WITH ELECTROMECHANICAL LOCKING
DIRECTION STEER-BY-WIRE AVEC VERROUILLAGE ÉLECTROMÉCANIQUE

(30) Priorität: 06.11.2009 DE 102009053226
(43) Veröffentlichungstag der Anmeldung: 12.09.2012
(73) Patentinhaber: ThyssenKrupp Presta Aktiengesellschaft, 9492 Eschen (LI)
(72) Erfinder: ROMBOLD, Manfred, 71364 Winnenden-Höfen (DE)
(74) Vertreter: Lenzing Gerber Stute
(86) Internationale Anmeldenummer: PCT/EP2010/006580
(87) Internationale Veröffentlichungsnummer: WO 2011/054475

(56) Entgegenhaltungen:
- DE-A1-102005 055 730
- DE-A1-102006 056 042
- DE-A1-102007 039 733
- DE-A1-102008 021 973
- FR-A1- 2 793 749
- FR-A1- 2 909 954
- JP-A- 2004 268 754
- US-B2- 7 293 626

## Beschreibung

Die vorliegende Erfindung betrifft eine Steer-by-wire-Lenkung mit den Merkmalen des Oberbegriffs des Anspruchs 1.

Die derzeit in PKW und Nutzfahrzeugen eingesetzten Lenkungen sind nahezu ausschließlich solche Lenkungen mit einem Lenkrad, einer Lenkwelle und einem Getriebe, dass eine Drehbewegung des Lenkrades in eine translatorische Bewegung der Spurstangen der gelenkten Räder umsetzt. Im PKW-Bereich sind dazu ausschließlich Zahnstangenlenkungen mit hydraulischer oder elektrischer Servounterstützung eingesetzt. Als Diebstahlsicherung wird bei diesen Lenkungen bekanntermaßen ein Lenkradschloss eingesetzt, dass im gesicherten Zustand mechanisch oder elektromechanisch die Lenkwelle blockiert und damit sowohl ein Drehen des Lenkrades als auch ein Verschwenken der gelenkten Räder verhindert. Ein Nebeneffekt besteht darin, dass das blockierte Lenkrad vielfach als Handgriff zur Erlcichterung des Ein- und Aussteigens genutzt wird.

Bei einer Lenkung mit direkter Kopplung des Lenkrades über eine Lenkwelle mit dem Lenkgetriebe wird in der FR 2793749 A1 vorgeschlagen, die elektromechanische Verriegelung an dem Servomotor vorzusehen. Zu diesem Zweck wird beispielsweise ein Rastbolzen in eine passende Bohrung des Rotors des Servomotors gebracht und der Servomotor und damit die gesamte Lenkung blockiert. Hintergrund dieser Lösung ist es, dass Lenkschloss aus dem Bereich der Lenksäule zu entfernen, um dort Bauraum freizugeben und eine mögliche Verletzungsgefahr für den Fahrer durch das Lenkschloss im Falle eines Aufpralls zu beseitigen. Es handelt sich bei dieser Lenkung nicht um eine gattungsgemäße Steer-by-wire-Lenkung.

Eine Lenkung ist aus der DE 10046167 A1 bekannt. Bei dieser Lenkung ist eine mechanische Auftrennung zwischen dem Bedienteil bestehend aus Lenkrad und oberer Lenkwelle und dem Getriebeteil bestehend aus dem Lenkgetriebe und einem Servoantrieb vorgesehen. Als Lenkschloss wird bei dieser Lenkung eine elektromechanische Schaltkupplung eingesetzt, die das Lenkrad über die Lenkwelle drehfest mit dem Chassis verbindet. Auf diese Weise wird eine Drehung des Lenkrades bei eingerasteter Kupplung wie bei einem Lenkschloss unterbunden. Das Lenkrad lässt sich nicht frei drehen und ist zudem als Handgriff geeignet. Das Lenkgetriebe ist jedoch nicht blockiert, so dass ein Verschwenken der Räder nach wie vor technisch möglich ist.

Des Weiteren ist eine gattungsgemäße Lenkung aus der DE 10 2008 021 973 A1 bekannt, die nach dem Steer-by-wire-Prinzip mit einem von einem Fahrer betätigbaren Lenkrad, das mit einem elektromotorischen Antrieb einen Elektromotor und ein Getriebe aufweist, ausgestattet ist, wobei eine hydraulische Blockierung des elektromotorischen Antriebs an oder in dem Lenkgetriebe vorgesehen ist. Es ist Aufgabe der vorliegenden Erfindung, eine Steer-by-wire-Lenkung dahingehend zu verbessern, dass die Schwenkbewegung der Vorderräder bei eingerastetem Lenkschloss blockiert ist. Diese Aufgabe wird von einer Lenkung mit den Merkmalen des Anspruchs 1 oder 5 gelöst.

Es ist eine Lenkvorrichtung für ein Straßenfahrzeug nach dem Steer-by-wire-Prinzip mit einem von einem Fahrer betätigbaren Lenkrad und mit einem nicht permanent mechanisch zwangsgekoppelten Lenkgetriebe, das mit einem elektromotorischen Antrieb zur Verschwenkung von gelenkten Rädern eingerichtet ist, wobei der elektromotorische Antrieb einen Elektromotor und einen Riementrieb mit einem Ritzel, einem Riemen und einer Riemenscheibe aufweist, wobei die Riemenscheibe getriebemäßig mit einer Gewindespindel gekoppelt ist, sowie mit einer elektromechanischen Blockierung des elektromotorischen Antriebs an oder in dem Lenkgetriebe, vorgesehen, die einen in einer Radialrichtung an den Riementrieb anpressbaren Bremsbügel aufweist.

Weil eine elektromechanische Blockierung des elektromechanischen Antriebs an oder in dem Lenkgetriebe vorgesehen ist, kann die Steer-by-wire-Lenkung nicht verschwenkt werden, auch wenn das möglicherweise vorhandene lenkradseitige Lenkschloss überwunden wurde. Weiter kann das Fahrzeug bei verriegelter Lenkung nicht rangiert werden, indem die Räder durch äußere Krafteinwirkung, beispielsweise von Hand, verschwenkt werden.

Durch den Reibschluss ist eine Blockierung in beliebiger Stellung des Lenkgetriebes möglich.

Weiterhin bevorzugt ist, dass der Bremsbügel an die Riemenscheibe anpressbar ist. Weil ein Verriegelungselement zur Blockierung des Riemengetriebes vorgesehen ist, kann die Verriegelungsvorrichtung in einfacher Weise in das Lenkgetriebe integriert werden.

Dabei kann der Riemen als Zahnriemen ausgestaltet sein, so dass auf der Außenseite des Riemens Zähne eigens für die Verriegelungsvorrichtung angeordnet sind.

Bevorzugt ist, dass ein Kugelumlauf zur Umsetzung der Drehbewegung des Riementriebs in eine Linearbewegung der Gewindespindel vorgesehen ist.

Weiterhin ist erfindungsgemäß eine Lenkvorrichtung für ein Straßenfahrzeug nach dem Steer-by-wire-Prinzip mit einem von einem Fahrer betätigbaren Lenkrad und mit einem nicht permanent mechanisch zwangsgekoppelten Lenkgetriebe, das mit einem elektromotorischen Antrieb zur Verschwenkung von gelenkten Rädern eingerichtet ist, wobei der elektromotorische Antrieb einen Elektromotor und einen Riementrieb mit einem Ritzel, einem Riemen und einer Riemenscheibe aufweist, wobei die Riemenscheibe getriebemäßig mittels einer Kugelmutter über einen Kugelumlauf mit einer Gewindespindel gekoppelt ist, sowie mit einer elektromechanischen Blockierung des elektromotorischen Antriebs an oder in dem Lenkgetriebe, vorgesehen, die einen in einer Radialrichtung an die Kugelmutter anpressbaren Bremsbügel aufweist.

Zudem ist vorteilhaft, wenn der Bremsbügel über einen Nocken und eine Rückholfeder betätigt wird.

Nachfolgend werden Ausführungsbeispiele der vorliegenden Erfindung anhand der Zeichnung beschrieben. Es zeigen:
- Fig. 1:: einen Riemenantriebe für eine elektromechanische Steer-by-wire-Lenkung mit einem reibschlüssigen Bremsbügel;
- Fig. 2:: eine Lenkung ähnlich Fig. 1 mit einem in eine Verzahnung einrastenden Bremsbügel; sowie
- Fig. 3:: eine formschlüssige Verriegelung einer elektromechanischen Steer-by-wire-Lenkung durch radial oder achsparallel eingreifende Zapfen.

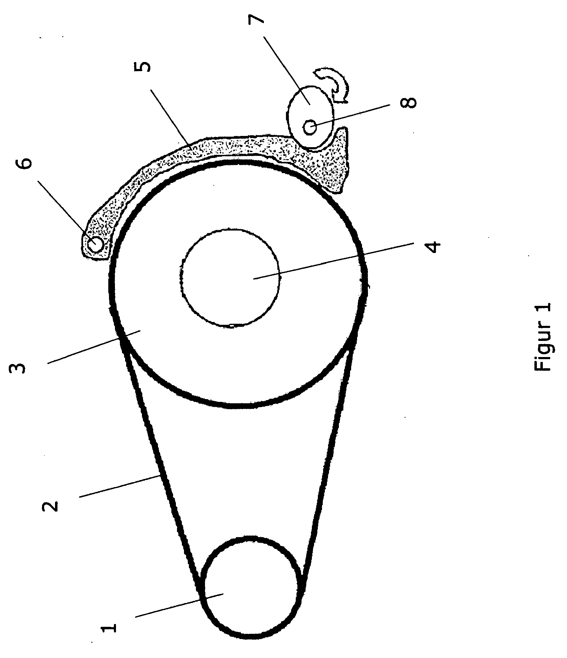

In der Fig. 1 ist schematisch ein Riemenantrieb dargestellt, der ein Ritzel 1 eines Elektromotors, ein Riemen 2 und eine Riemenscheibe 3 umfasst. Dcr Riemen 2 ist vorzugsweise als Zahnriemen ausgeführt. Die Riemenscheibe 3 ist in an sich bekannter Weise drehfest mit einem nicht dargestellten Kugelumlauf verbunden, der die Drehbewegung der Riemenscheibe 3 in eine Axialverschiebung einer nur angedeuteten Gewindespindel 4 umsetzt. Die Gewindespindel 4 treibt ebenfalls in bekannter Weise über Spurstangen und Achsschenkel die Lenkbewegung von gelenkten Rädern eines Kraftfahrzeugs an. Der Antrieb des Ritzels 1 durch den Elektromotor erfolgt in Abhängigkeit von einer elektronischen Steuerung. Durch Rückwirkung auf die gelenkten Räder und dadurch auf die Gewindespindel eines Kraftfahrzeugs an. Der Antrieb des Ritzels 1 durch den Elektromotor erfolgt in Abhängigkeit von einer elektronischen Steuerung. Durch Rückwirkung auf die gelenkten Räder und dadurch auf die Gewindespindel kann auch umgekehrt ohne Ansteuerung des Elektromotors das Getriebe bewegt werden.

Um in verriegeltem Falle diese Bewegung zu verhindern, ist eine Verriegelungsvorrichtung vorgesehen, die einen Bremsbügel 5 aufweist, der um ein Schwenklager 6 schwenkbar angeordnet ist. Der Bremsbügel 5 umgibt über einen gewissen Winkelbereich von etwa 120° die Riemenscheibe 3 und ist in der dargestellten frei drehbaren Stellung der Riemenscheibe 3 von der Riemenscheibe und dem Zahnriemen beabstandet. Ein Verstellnocken 7 ist drehbar um eine Achse 8 in Anlage mit dem Bremsbügel 5 angeordnet. Die Achse 8 ist die Abtriebsseite eines elektromotorischen Gewindetriebs mit einer Positionserkennung. Die dargestellte Position ist die nicht verriegelte Position.

Bei einer Verriegelung der Steer-by-wire-Lenkung im Sinne eines Lenkschlosses wird der Gewindetrieb der Welle 8 angesteuert, um den Nocken 7 um 90° bis 180° zu verdrehen. Dadurch wird der Bügel 5 um die Schwenkachse 6 geschwenkt und an den äußeren Umfang der Riemenscheibe 3 oder an die äußere Oberfläche des Zahnriemens 2 angepresst. Der in Fig. 1 dargestellte Riementrieb ist dadurch blockiert. Auch axiale Lasten der Gewindespindel 4 führen dann nicht zu einer Drehung der Riemenscheibe 3. Die Lenkung ist folglich blockiert, und zwar auch gegenüber dem Versuch, die gelenkten Räder von außen manuell oder mittels Werkzeug zu verschwenken.

Eine Rückdrehung des Nockens 7 führt in Verbindung mit einer Rückholfeder zum Lösen der Verriegelung.

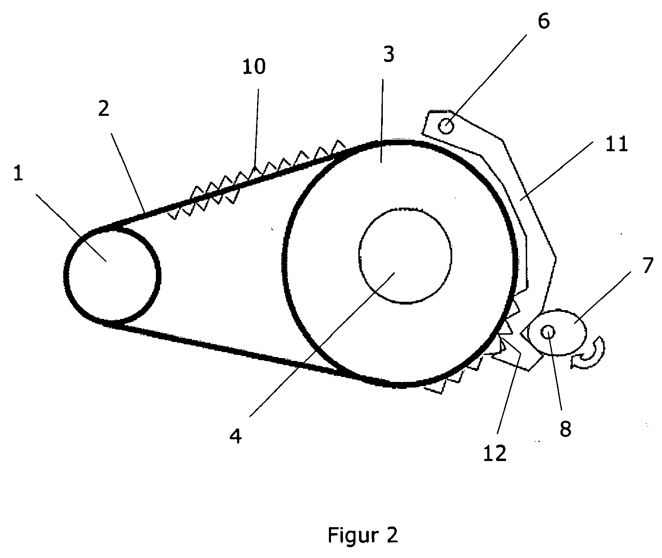

Eine ähnliche Ausführungsform der vorliegenden Erfindung ist in der Fig. 2 dargestellt. Die Fig. 2 zeigt wiederum einen Zahnriementrieb mit dem Motorritzel 1, dem Zahnriemen 2 und der Riemenscheibe 3 sowie der Gewindespindel 4. Der Zahnriemen ist bei dieser Ausführungsform mit einer zusätzlichen äußeren Verzahnung 10 versehen. Ein Bremsbügel 11 weist eine der Außenseite des Zahnriemens und der äußeren Verzahnung 10 zugewandten kompatible Verzahnung 12 auf. Im Verriegelungsfall greift die Verzahnung 12 des Bremsbügels 11 in die äußere Verzahnung 10 des Zahnriemens ein und blockiert diesen formschlüssig, so dass auch unter erheblicher Krafteinwirkung die Verriegelung nicht durchrutschen kann. Dies wäre theoretisch brei der Verriegelung der Fig. 1 möglich.

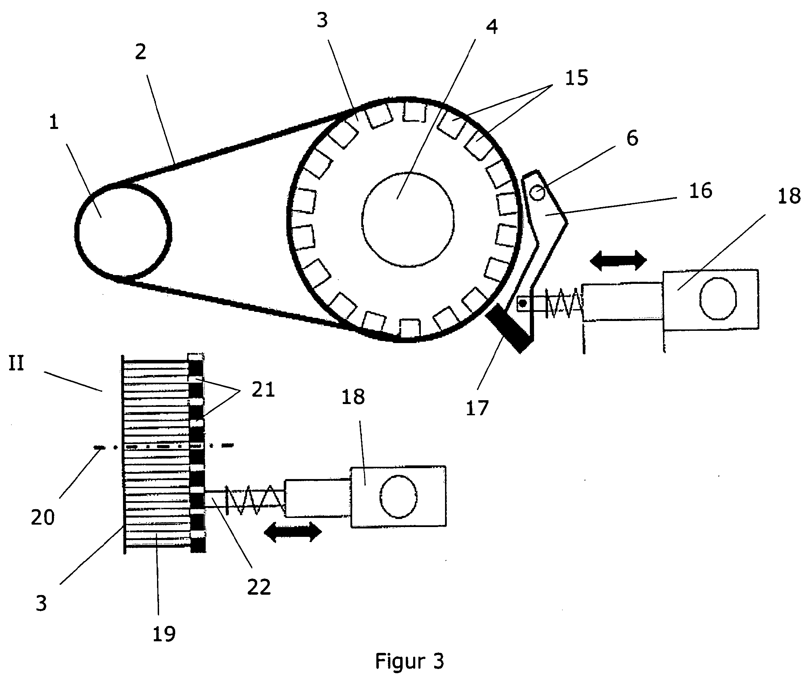

Die Fig. 3 zeigt eine Lenkung mit formschlüssiger Verriegelung. Bei dieser Lenkung ist wiederum der Riemenantrieb mit dem Ritzel 1, dem Zahnriemen 2 und der Riemenscheibe 3 vorgesehen. Auch die Gewindespindel 4 ist wie in den vorherigen Ausführungsbeispielen vorhanden. Die Riemenscheibe 3 ist hier mit einer Anzahl von radialen Ausnehmungen 15 versehen, die über den Umfang der Riemenscheibe 3 verteilt sind. Die Ausnehmungen 15 sind in axialer Richtung der Gewindespindel 4 neben dem Zahnriemen angeordnet. Ein Rastarm 16 ist um das Schwenklager 6 schwenkbar neben der Riemenscheibe 3 angeordnet. Ein Rastzapfen 17 an dem freien Ende des Rastarms 16 ist so orientiert, dass bei Schwenkbewegung des Rastarms 16 um das Schwenklager 6 der Rastzapfen 17 in die Ausnehmungen 15 eingreifen und wieder daraus heraus bewegt werden kann. Als Antrieb für den Rastarm 16 ist ein elektromechanischer Aktuator 18 von an sich bekannter Bauweise vorgesehen.

Während bei dieser Lenkung der Rastzapfen 17 in Radialrichtung in die Riemenscheibe 3 eingreift, kann auch vorgesehen sein, dass ein Eingriff in achsparalleler Richtung erfolgt. Dies ist in der Fig. 3 bei II veranschaulicht. Die Riemenscheibe 3 ist hier mit einer äußeren verzahnung 19 für den Zahnriemen 2 in einer radialen Draufsicht dargestellt. Parallel zu einer Achse 20, die auch die Achse der Gewindespindel 4 sowie die Drehachse der Riemenscheibe 3 darstellt, sind hier Ausnehmungen 21 angeordnet, in die ein parallel zu der Achse 20 beweglicher Zapfen 22 zur Verriegelung der Riemenscheibe 3 eingreifen kann. Wiederum ist zum Antrieb der elektromechanische Aktuator 18 vorgesehen, der in seinem Aufbau an sich bekannt ist.

Im normalen Betrieb der Steer-by-wire-Lenkung sorgt eine elektronischen Steuerung dafür, dass der Verstellnocken 7 bzw. der Aktuator 18 in die nicht blockierende Stellung verfahren wird. Die Steer-by-wire-Lenkung arbeitet dann derart, dass das Drehen des Lenkrades über einen Sensor abgetastet wird und eine entsprechende Ansteuerung des Elektromotors mit dem Motorritzel 1 über das Getriebe 2, 3 zu einer Axialverlagerung der Gewindespindel 4 führt, die wiederum entsprechend die gelenkten Räder betätigt. Der Lenkvorgang ist für den Fahrer dann wie bei einer konventionellen Lenkung möglich. Beim Abstellen und Verlassen des Fahrzeugs bewirkt die elektronische Steuerung, dass durch den Verstellnocken 7 bzw. durch den Aktuator 18 die Riemenscheibe 3 verriegelt wird. Zusätzlich kann wie im Stand der Technik eine Blockierung oder Verriegelung des Lenkrades vorgesehen sein, damit das Lenkrad nicht frei drehbar ist.

Ein Diebstahl des so gesicherten Fahrzeugs wird dadurch erschwert, dass die gelenkten Räder nicht verschwenkt werden können, selbst wenn das lenkradseitige Lenkschloss überwunden wird. Die Blockierung der gelenkten Räder erschwert die Manipulation des Kraftfahrzeugs, beispielsweise beim Schieben, Abschleppen oder Verladen.

Es ist auch denkbar, dass Fahrzeug mit Steer-by-wire-Lenkung selbst bei blockiertem Lenkrad dadurch fahrbar gemacht werden, dass in die elektronische Steuerung eingegriffen wird und das Lenkgetriebe unabhängig von der Drehung der Lenksäule angetrieben wird. Zumindest für den Zweck einer Verladung ist das Fahrzeug dann auch bei blockiertem lenkradseitigem Lenkschloss steuerbar. Diese Art des Eingriffs wird durch die erfindungsgemäße getriebeseitige Verriegelung der Steer-by-wire-Lenkung unterbunden oder zumindest weiter erschwert.

### Bezugszeichen

- 1.: Ritzel
- 2.: Riemen
- 3.: Riemenscheibe
- 4.: Gewindespindel
- 5.: Bremsbügel
- 6.: Schwenklager
- 7.: Verstellnocken
- 8.: Achse
- 10.: äußere Verzahnung
- 11.: Bremsbügel
- 12.: Kompatible Verzahnung
- 15.: Radiale Ausnehmungen
- 16.: Rastarm
- 17.: Rastzapfen
- 18.: Aktuator
- 19.: Verzahnung
- 20.: Achse
- 22.: Zapfen

## Patentansprüche

1. Lenkvorrichtung für ein Straßenfahrzeug nach dem Stccrby-wire-Prinzip mit einem von einem Fahrer betätigbaren Lenkrad und mit einem nicht permanent mechanisch zwangsgekoppelten Lenkgetriebe, das mit einem elektromotorischen Antrieb zur Verschwenkung von gelenkten Rädern eingerichtet ist, wobei der elektromotorische Antrieb einen Elektromotor und einen Riementrieb mit einem Ritzel (1), einem Riemen (2) und einer Riemenscheibe (3) aufweist, wobei die Riemenscheibe (3) getriebemäßig mit einer Gewindespindel (4) gekoppelt ist, sowie mit einer Blockierung des elektromotorischen Antriebs an oder in dem Lenkgetriebe, **dadurch gekennzeichnet, dass** ein in einer Radialrichtung an den Riementrieb (1, 2, 3) anpressbarer Bremsbügel (5) vorgesehen ist.

2. Lenkvorrichtung nach Anspruch 1, **dadurch gekennzeichnet, dass** der Bremsbügel (5) an die Riemenscheibe (3) anpressbar ist.

3. Lenkvorrichtung nach einem der vorhergehenden Ansprüche, **dadurch gekennzeichnet, dass** der Riemen (2) ein Zahnriemen ist und dass auf der Außenseite des Riemens (2) Zähne (10) eigens für die Verriegelungsvorrichtung (11) angeordnet sind.

4. Lenkvorrichtung nach einem der vorhergehenden Ansprüche, **dadurch gekennzeichnet, dass** ein Kugelumlauf zur Umsetzung der Drehbewegung des Riementriebs (1, 2, 3) in eine Linearbewegung der Gewindespindel (4) vorgesehen ist.

5. Lenkvorrichtung für ein Straßenfahrzeug nach dem Steer-by-wire-Prinzip mit einem von einem Fahrer betätigbaren Lenkrad und mit einem nicht permanent mechanisch zwangsgekoppelten Lenkgetriebe, das mit einem elektromotorischen Antrieb zur Verschwenkung von gelenkten Rädern eingerichtet ist, wobei der elektromotorische Antrieb einen Elektromotor und einen Riementrieb mit einem Ritzel (1), einem Riemen (2) und einer Riemenscheibe (3) aufweist, wobei die Riemenscheibe (3) getriebemäßig mittels einer Kugelmutter über einen Kugelumlauf mit einer Gewindespindel (4) gekoppelt ist, sowie mit einer Blockierung des elektromotorischen Antriebs an oder in dem Lenkgetriebe, **dadurch gekenntzeichnet**, dass ein in einer Radialrichtung an die Kugelmutter anpressbarer Bremsbügel (5) vorgesehen ist.

6. Lenkvorrichtung nach einem der vorhergehenden Ansprüche, **dadurch gekenntzeichnet**, dass der Bremsbügel (5, 11) über einen Nocken (7) und eine Rückholfeder betätigbar ist.

## Claims

1. Steering device for a road vehicle, according to the steer-by-wire principle, having a steering wheel which can be operated by a driver and having a steering gear which is not permanently mechanically positively coupled and which is equipped with an electromotive drive for pivoting steered wheels, wherein the electromotive drive has an electric motor and a belt drive with a pinion (1), a belt (2) and a belt pulley (3), wherein the belt pulley (3) is coupled to a threaded spindle (4) in the manner of a transmission, as well as having a locking device of the electromotive drive on or in the steering gear, **characterised in that** a brake arm (5) is provided which can be pressed onto the belt drive (1, 2, 3) in a radial direction.

2. Steering device according to Claim 1, **characterised in that** the brake arm (5) can be pressed onto the belt pulley (3).

3. Steering device according to any one of the preceding claims, **characterised in that** the belt (2) is a toothed belt, and **in that** teeth (10) are arranged on the outside of the belt (2) specifically for the locking device (11).

4. Steering device according to any one of the preceding claims, **characterised in that** a recirculating ball is provided for translating the rotation movement of the belt drive (1, 2, 3) into a linear movement of the threaded spindle (4).

5. Steering device for a road vehicle according to the steer-by-wire principle, having a steering wheel which can be operated by a driver and having a steering gear which is not permanently mechanically positively coupled and which is equipped with an electromotive drive for pivoting steered wheels, wherein the electromotive drive has an electric motor and a belt drive with a pinion (1), a belt (2) and a belt pulley (3), wherein the belt pulley (3) is coupled to a threaded spindle (4) in the manner of a transmission by means of a ball nut, as well as having a locking device of the electromotive drive on or in the steering gear **characterised in that** a brake arm (5) is provided which can be pressed onto the ball nut in a radial direction.

6. Steering device according to any one of the preceding claims, **characterised in that** the brake arm (5, 11) can be actuated via a cam (7) and a return spring.

## Revendications

1. Dispositif de direction destiné à un véhicule routier, selon le principe d'une direction électrique câblée ou "steer by wire", comprenant un volant de direction pouvant être actionné par un conducteur et une transmission d'entraînement de direction non couplée mécaniquement de manière contrainte permanente, qui est équipée d'un système d'entraînement à moteur électrique pour faire pivoter des roues directrices, dispositif de direction
dans lequel le système d'entraînement à moteur électrique comprend un moteur électrique et une transmission d'entraînement à courroie avec un pignon (1), une courroie (2) et une poulie de courroie (3), la poulie de courroie (3) étant couplée, sur le plan de la transmission d'entraînement, à une vis (4), et l'ensemble comprenant également un blocage du système d'entraînement à moteur électrique sur ou dans la transmission d'entraînement de direction,
**caractérisé en ce qu'**il est prévu un arceau de frein (5) pouvant être pressé, dans la direction radiale, contre la transmission d'entraînement à courroie (1, 2, 3).

2. Dispositif de direction selon la revendication 1, **caractérisé en ce que** l'arceau de frein (5) peut être pressé contre la poulie de courroie (3).

3. Dispositif de direction selon l'une des revendications précédentes, **caractérisé en ce que** la courroie (2) est une courroie crantée, et **en ce que** sur le côté extérieur de la courroie (2) sont agencées des dents (10) spécialement pour le dispositif de verrouillage (11).

4. Dispositif de direction selon l'une des revendications précédentes, **caractérisé en ce qu'**il est prévu un système à recirculation de billes pour convertir le mouvement de rotation de la transmission d'entraînement à courroie (1, 2, 3) en un mouvement linéaire de la vis (4).

5. Dispositif de direction destiné à un véhicule routier selon le principe d'une direction électrique câblée ou "steer by wire", comprenant un volant de direction pouvant être actionné par un conducteur et une transmission d'entraînement de direction non couplée mécaniquement de manière contrainte permanente, qui est équipée d'un système d'entraînement à moteur électrique pour faire pivoter des roues directrices, dispositif de direction
dans lequel le système d'entraînement à moteur électrique comprend un moteur électrique et une transmission d'entraînement à courroie avec un pignon (1), une courroie (2) et une poulie de courroie (3), la poulie de courroie (3) étant couplée, sur le plan de la transmission d'entraînement, à une vis (4) au moyen d'un écrou à billes, par l'intermédiaire d'un système à recirculation de billes, et l'ensemble comprenant également un blocage du système d'entraînement à moteur électrique sur ou dans la transmission d'entraînement de direction,
**caractérisé en ce qu'**il est prévu un arceau de frein (5) pouvant être pressé, dans la direction radiale, contre l'écrou à billes.

6. Dispositif de direction selon l'une des revendications précédentes, **caractérisé en ce que** l'arceau de frein (5, 11) peut être actionné par l'intermédiaire d'une came (7) et d'un ressort de rappel.
